# EUROPEAN PATENT APPLICATION

(11) **EP 3 418 612 A1**
(43) Date of publication of application: **26.12.2018**
(21) Application number: 18176800.3
(22) Date of filing: 08.06.2018
(51) Int. Cl.: F16K 15/16

(54) **STRUCTURE FOR VANE-TYPE VALVE ASSEMBLY**

(30) Priority: 19.06.2017 BR 102017013190
(71) Applicant: Whirlpool S.A., 04578-000 São Paulo - SP (BR)
(72) Inventor: PEREIRA, Evandro Luiz Lange, 89218-040 Joinville SC (BR)
(74) Representative: Soldatini, Andrea

(57) **Abstract**

The present invention belongs to the technological field of arrangements for valve assembly in positive displacement compressors.

Problem to be solved: Currently, maintenance of the initial state normally opened of a vane-type valve is difficult to obtain. Either the valve itself must be pre-tensioned or its assembly structure must contain a vertical spacer.

Problem solving: It is disclosed a structure for vane-type valve assembly comprising at least one seating plane and at least one sealing plane, wherein both are angularly out of alignment from one another, that is, the seating plane is defined at a first angle α and the sealing plane is defined at a second angle.

## Description

### Field of the Invention

The present invention refers to a structure for vane-type valve assembly in a positive displacement compressor and, more particularly, a structure comprising a base for seating and/or fixing the static end of a vane-type valve. The general objective of the present invention is to provide a simplified means capable of determining the initial state of the vane-type valve.

### Background of the Invention

As known to those skilled in the art, positive displacement compressors, also known as reciprocating compressors, typically include a fluid compression system that includes a control mechanism of the suction and discharge of working fluid. In general terms, such control mechanism basically consists of at least one suction valve and at least one discharge valve, which are able to clog/unclog the holes by which the working fluid enters or exits from the compression cylinder.

Occasionally, suction valves or discharge valves may also be applied, in order to perform an analogous or equivalent function, in other components or mechanisms that make part of a positive displacement compressor. There are known, for example, technical solutions in which suction valves or discharge valves can be used in acoustic filters that make part of the positive displacement compressor.

Although there are known different types of valves that can be used in positive displacement compressors, it is of particular interest, according to the core of the present invention, to consider the vane-type valves. Briefly, a vane-type valve is that formed by a flexible metal blade. In general terms, a vane-type valve comprises a substantially static end, capable of being fixedly seated and/or fixed to a compressor structure, and a dynamic end, able to clog/unclog one or more holes through which the working fluid flows.

Vane-type valves, especially those used as suction valves or discharge valves in positive displacement compressors, are well known to those skilled in the art. Inclusively, an infinitude of models, normally variable in the geometrical aspect, of vane-type valves are pertaining to the current state of the art.

In the vast majority of applications of vane-type valves in positive displacement compressors, it is common for the initial state of said valve, relative to its working hole, to be normally closed, that is, it is common that in the absence of factors and stimulus the valve is mounted in any structure so as to keep its working hole sealed/clogged.

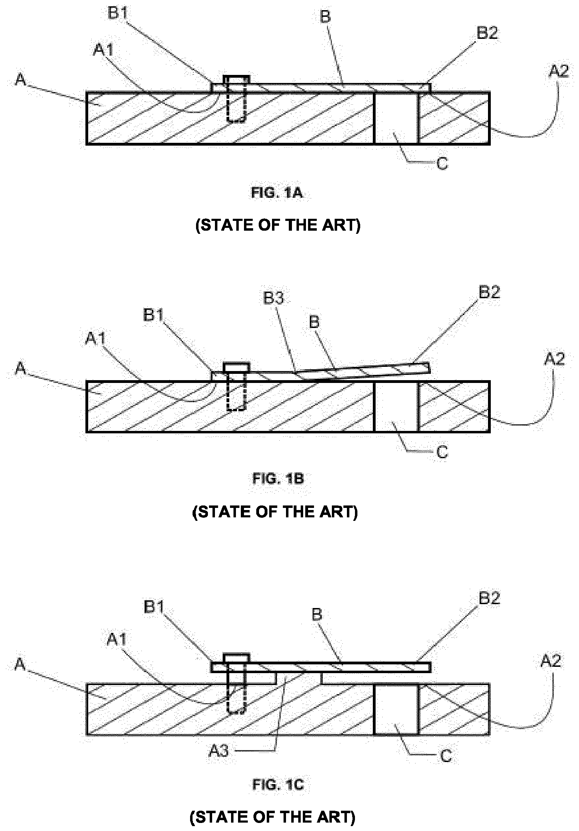

Figure 1A shows, in a schematic and simplified manner, a trivial situation in which a vane-type valve **B** has an initial state, with respect to the hole **C,** normally closed. In this exemplification the vane-type valve **B** is fixed in a structure **A**, wherein its static end **B1** is fixed in a plane **A1** of the structure **A** by means of an pierced fixing element **C**, and its dynamic end **B2** is seated on the hole **C** in a plane **A2** of the structure **A.** It is observed that the planes **A1** and **A2** of the structure **A** are horizontally equivalent, that is, they are defined on a same horizontal level.

In addition, as is well known to those skilled in the art, it is known that certain applications may take advantage if a vane-type valve has its initial state normally opened. For example, it is mentioned cases in which it is desired to maintain a suction valve opened at the starting instant of the positive displacement compressor in order to decrease the starting torque of the compressor motor.

In general terms, two constructive possibilities of obtaining a vane-type valve in the initial state opened are known. Such constructive possibilities are shown, in a schematic and simplified manner, in Figures 1B and 1C.

The constructive possibility shown in Figure 1B involves a traditional structure **A** and a pre-tensioned vane-type valve **B.** Said pre-tensioned vane-type valve **B**, normally obtained by means of a mechanical stamping process, is deformed so as to present a difference in level between the static end **B1** and the dynamic end **B2**. Thus, although the static end **B1** of the pre-tensioned vane-type valve **B** is fixed coplanar to the plane **A1** of the structure **A**, its dynamic end **B2** is naturally spaced apart from the hole **C** and the plane **A2** of the structure **A.** It is observed that planes **A1** and **A2** of structure **A** are horizontally equivalent, that is, they are defined on a same horizontal level. That is, a vane-type valve can act with the initial state normally opened if it is made in a pre-tensioned form. However, this constructive possibility normally, as it is based on plastic deformation, tends to shorten the service life of the valve, especially at the pre-tension point **B3** defined by hydraulic press knock.

Further examples of the constructive possibility shown in Figure 1B may be verified in patent document WO 2015/113127.

The constructive possibility shown in Figure 1C involves a traditional vane-type valve **B** and a modified structure **A**, which comprises a projection **A3** between the planes **A1** and **A2.** Therefore, it is observed that the planes **A1** and **A2** of the structure **A** are horizontally equivalent to each other, the projection **A3** existing in a raised plane, however, coplanar to the planes **A1** and **A2.** Thus, although the entire extent of the vane-type valve **B** is disposed in a coplanar manner relative to the structure **A**, its dynamic end **B2** is naturally spaced apart from the hole **C** and the plane **A2** of the structure **A.** That is, a vane-type valve can act with the initial state normally opened if the structure on which it is mounted (usually, but not obligatorily, a metal valve plate) contains a vertical spacer. However, this constructive possibility presents severe sealing problems.

Further examples of the constructive possibility shown in Figure 1C can be verified in the patent document WO 2005/033510.

It is then based on the scenario presently reported that the present invention arises.

### Objectives of the Invention

Thus, it is the primary objective of the present invention to provide a structure for vane-type valve assembly in positive displacement compressor capable of maintaining a vane-type valve in initial state normally opened without the need to perform deformations in the valve, and in a simplified form with regard to its manufacturing process.

It is further an objective of the present invention to disclose an inventive core whose possibility of application extends to any and every structure for vane-type valve assembly in positive displacement compressor.

More particularly, it is an objective of the present invention to disclose an inventive core whose possibility of application achieves polymeric structures for vane-type valve assembly in a positive displacement compressor, such as the internal polymeric walls of an acoustic filter used in positive displacement compressors.

### Summary of the Invention

The objectives summarized above are fully achieved by means of the structure for vane-type valve assembly, which comprises at least one seating plane (for the static end of a vane-type valve) and at least one sealing plane (for the dynamic end of a vane-type valve), wherein the seating plane and the sealing plane are angularly out of alignment from each other.

That is, in accordance with the present invention, the seating plane of the structure for vane-type valve assembly is defined at a first angle α and the sealing plane of the structure for vane-type valve assembly is defined at a second angle β.

### Brief Description of the Drawings

The present invention will now be described in detail on the basis of the illustrative figures listed below, which:
Figures 1A, 1B and 1C show constructive embodiments of solutions directed to the technological field addressed herein, in accordance with the current state of the art;
Figure 2 shows, in accordance with the preferred embodiment of the present invention, the structure for vane-type valve assembly;
[01] Figure 3 shows, in an exploded manner, the structure for vane-type valve assembly with a vane-type valve;
Figure 4 shows, in assembled form, the structure for vane-type valve assembly with a vane-type valve in opened natural condition;
Figure 5 shows, in assembled form, the structure for vane-type valve assembly with a vane-type valve in closed functional natural condition;
Figure 6 shows a first optional embodiment of the structure for vane-type valve assembly;
Figure 7 shows a second optional embodiment of the structure for vane-type valve assembly; and
Figure 8 shows a third optional embodiment of the structure for vane-type valve assembly.

### Detailed Description of the Invention

According to the principal objectives of the present invention, it is disclosed a structure for vane-type valve assembly able to make possible maintenance of the vane-type valve in an initial state normally opened without the need for said vane-type valve to be made in a pre-tensioned form.

In this regard, it should be highlighted that said vane-type valve **2** is a totally traditional valve, that is, which comprises a static end **21** (especially dedicated to fixing the valve in a fixed reference) and a dynamic end **22** (especially dedicated to movement as a function of external stimulus), said ends **21** and **22** being distally opposed.

According to the general objective of the present invention, said vane-type valve **2**, even being traditional, is maintained in an initial state normally opened due to the structure **1**, which basically comprises a seating plane **11** (especially adapted for receiving the static end **21** of the vane-type valve **2**) and the sealing plane **12** (which, comprising the working hole **14**, is specially adapted for cooperation with the dynamic end **22** of the vane-type valve **2**), wherein the seating plane **11** and the sealing plane **12** are angularly out of alignment from each other.

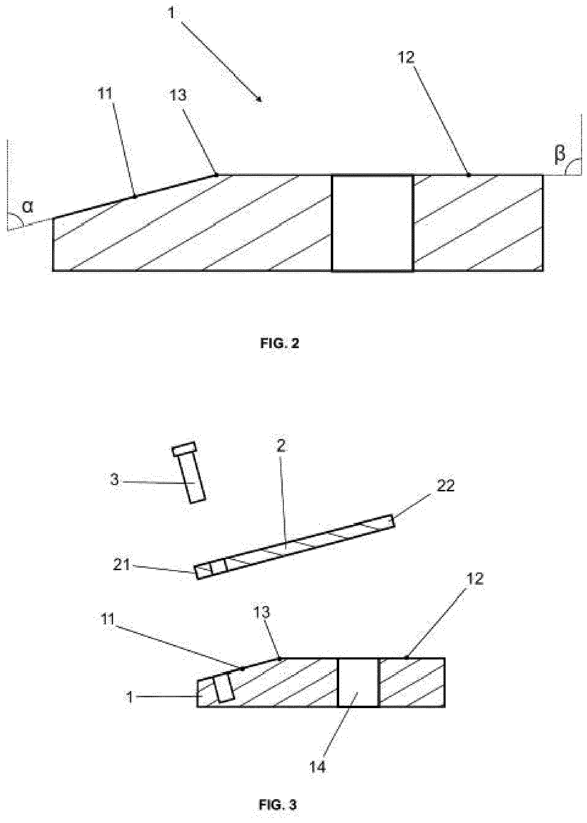

More particularly, as shown in Figure 2, the seating plane **11** is defined at a first angle **α**, and the sealing plane **12** is defined at a second angle **β**, wherein the angular difference between said planes is greater than 90° and less than 180°.

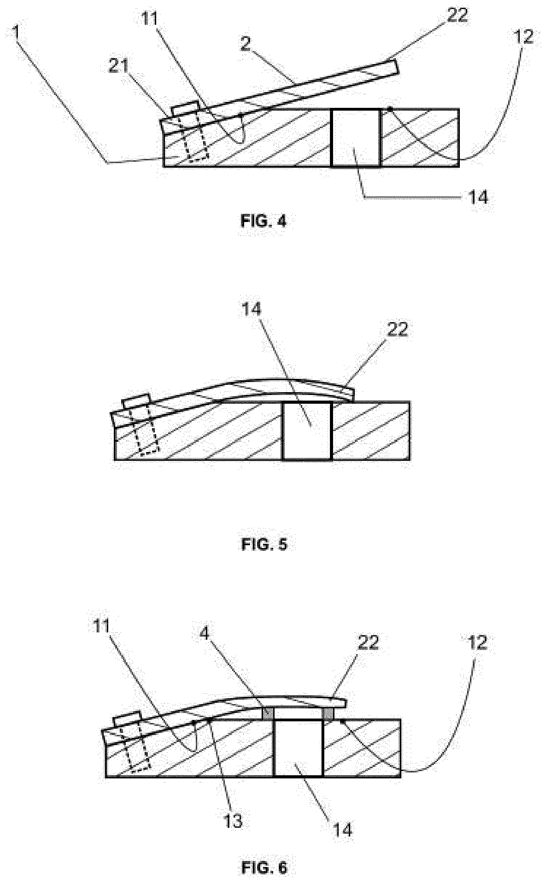

Considering that the static end **21** of the vane-type valve **2** is fixed to the seating plane **11** of the structure **1** (by means of a conventional fixing component **3**, as shown in Figure 3), the spacing between the dynamic end **22** of the vane-type valve **2** and the hole **14** of the structure **1** is defined directly by the angulation of the seating plane **11**, as shown in Figure 4.

Like this, the vane-type valve **2** is maintained in an initial state normally opened without the need for it to undergo physical-mechanical blemishes (as exemplified in Figure 1B) and without the need for the structure itself to be made with a vertical spacer (as exemplified in Figure 1C).

As shown in Figure 5, the dynamic end **22** of the vane-type valve **2**, when closed, has its deformation point defined near the transition point **13** of the structure **1.** Said transition point **13** of the structure **1** comprises the bordering point between the seating plane **11** and the sealing plane **12** of the structure **1.** In this regard, it is verified that the transition point **13** of the structure **1** (and, consequently, the vertical extensions of the planes **11** and **12**) can be defined according to the general needs of the project such as the flexibility of the vane-type valve **2.**

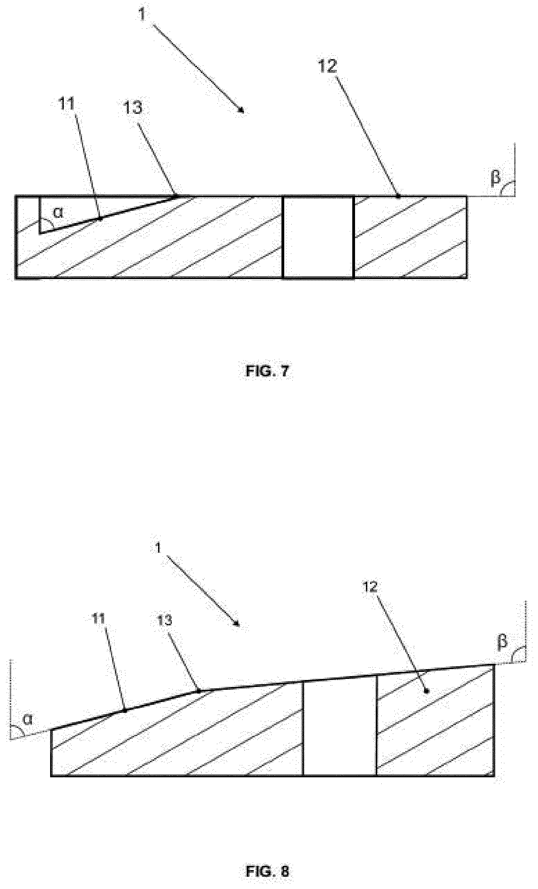

Preferably, as shown in Figures 2, 3 and 4, it is verified that the transition point **13** and the sealing plane **12** are coplanar. However, this condition is not an obligation, after all, as shown in Figure 8, the sealing plane **12** may be inclined with respect to the transition point **13**, that is, the transition point **13** and the sealing plane **12** are defined in different horizontal planes.

From a factory point of view, the structure **1** can be manufactured in simplified form, after all, the seating plane **11** can be obtained, in a controlled manner, by mechanical stamping, machining or thermoforming process. As shown in Figure 7, the seating plane **11** may comprise a cavity with inclined bottom formed from the sealing plane **12.**

As shown in Figure 6, the structure **1** can receive on its sealing plane **12**, preferably around the hole **14**, a coplanar spacer element **4**, which is capable of optimizing the seal between the dynamic end **22** of the vane-type valve **2** and the hole **14** of the structure **1.**

According to the present invention, the structure **1** - as explained above - may comprise a valve plate (see attached illustrations) or may comprise a wall of an acoustic filter (embodiment not particularly shown, but of easy intuition).

It is important to emphasize that the above description has the sole purpose of describing, in an exemplary manner, the particular embodiment of the utility model in question. Therefore, it is clear that modifications, variations and constructive combinations of the elements performing the same function substantially in the same manner to achieve the same results, remain within the scope of protection defined by the appended claims.

## Claims

1. Structure for vane-type valve assembly, comprising at least one seating plane (11) and at least one sealing plane (12), being especially **characterized by** the fact that the seating plane (11) and the sealing plane (12) are angularly out of alignment from each other.

2. Structure, according to claim 1, **characterized by** the fact that:
the seating plane (11) is defined at a first angle (α); and
the sealing plane (12) is defined at a second angle (β).

3. Structure, according to claim 1, **characterized by** the fact that the seating plane (11) comprises a cavity with inclined bottom formed from the sealing plane (12).

4. Structure, according to claim 1, **characterized by** the fact that the transition point (13) and the sealing plane (12) are coplanar.

5. Structure, according to claim 1, **characterized by** the fact that it further comprises at least one coplanar spacer element (4) arranged on the sealing plane (12).

6. Structure, according to claim 1, **characterized by** the fact that it comprises a valve plate.

7. Structure, according to claim 1, **characterized by** the fact that it comprises a wall of an acoustic filter.
